# FASCICULE DE BREVET EUROPEEN

(11) **EP 0 355 338 B1**
(45) Date de publication et mention de la délivrance du brevet: **27.10.1993**
(21) Numéro de dépôt: 89112110.5
(22) Date de dépôt: 03.07.1989
(51) Int. Cl.: H01Q 1/32, H04B 5/00, B61L 3/22

(54) **Dispositif de transmission d'informations et/ou d'instructions à large bande passante entre un élément mobile dans un plan et un poste de contrôle**
Breitband-Informations- und/oder Befehlsübertragungsvorrichtung zwischen einem beweglichen Element und einer Kontrollstelle
Wide-band information and/or instruction transmitting device between a moving element in a plane and a control station

(30) Priorité: 12.07.1988 FR 8809471
(43) Date de publication de la demande: 28.02.1990
(73) Titulaire: GEC ALSTHOM SA, 75116 Paris (FR)
(72) Inventeur: Heddebaut, Marc, F-59262 Sainghin en Melantois (FR)
(74) Mandataire: Weinmiller, Jürgen

(56) Documents cités:
- EP-A- 0 274 055
- DE-A- 2 555 909
- DE-B- 2 404 363
- FREQUENZ, vol. 35, no. 12, décembre 1981, pages 318-323, Berlin, DE; H. DALICHAU et al.: "Nachrichtenübertragung mit Schlitzhohlleitern"

## Description

La présente invention concerne un dispositif de transmission d'informations et/ou d'instructions à large bande passante et/ou de localisation entre un élément mobile dans un plan et un poste de contrôle de cet élément.

La demanderesse a déjà proposé dans le document FR-A-2608119, un dispositif de transmission d'informations et/ou d'instructions à large bande passante entre un véhicule ferroviaire et un poste de contrôle de trafic. Ce dispositif ne s'applique toutefois qu'à des transmisssions entre un tube creux formant guide d'ondes en hyperfréquences et un véhicule suivant une voie de circulation sensiblement parallèle au tube creux et à faible distance de celui-ci, avec des débattements latéraux ne pouvant dépasser quelques dizaines de centimètres. Il ne permettait pas la transmission d'informations et/ou d'instructions entre un poste de contrôle et un élément mobile dans un plan, pouvant se trouver à des distances du tube creux formant guide d'ondes variant de façon importante, par exemple de plusieurs mètres.

L'article de H. Dalichau et al. "Nachrichtübertragung mit Schlitzhohlleitern", Frequenz, vol. 35, no. 12, décembre 1981, pages 318-323, Berlin, DE, décrit un dispositif similaire pour transmission d'informations entre un élément mobile et un poste de contrôle, comprenant un tube creux fixe formant guide d'ondes en hyperfréquences et muni d'une fente médiane continue, donc avec les caractéristiques du dispositif défini dans le préambule de la revendication 1.

La présente invention a pour but de permettre une transmission d'informations et/ou d'instructions de ce genre, notamment dans le cas de liaisons entre un poste de contrôle et un pont roulant ou télémanipulateur en milieu dangereux.

Le dispositif selon l'invention est caractérisé en ce qu'il comprend en outre
un tube creux mobile, porteur de l'élément mobile et formant guide d'ondes en hyperfréquences, dont l'axe forme un angle avec celui du tube creux fixe, et assujetti à se déplacer en translation parallèle à la fente médiane continue du tube creux fixe, et muni d'une antenne électrique plongeant dans cette fente médiane, d'une transition câble coaxial-guide d'ondes pour relier cette antenne au tube creux mobile et de moyens de transmission de rayonnement en hyperfréquences avec l'élément mobile à mettre en liaison avec le poste de contrôle.

Il répond en outre de préférence à au moins l'une des caractéristiques suivantes :
- Le tube creux mobile est muni d'une fente médiane continue, et les moyens de transmission du rayonnement en hyperfréquences de ce tube à l'élément mobile comprennent la fente médiane continue du tube creux mobile et une antenne associée à l'élément mobile plongeant dans cette fente médiane continue.
- Le tube creux mobile est muni de fentes rayonnantes perpendiculaires à son axe, et l'élément mobile est muni d'une antenne de réception et/ou d'émission d'ondes hyperfréquences vers les fentes du tube creux mobile.
- Il comporte au moins un générateur d'ondes hyperfréquences sous trois fréquences différentes
   a) une première fréquence excitant un mode fondamental TE01 dans les tubes creux fixe et mobile et assurant un champ homogène au-dessus du réseau de fentes rayonnantes du tube creux mobile,
   b) une deuxième fréquence excitant un mode fondamental TE01 dans les tubes creux fixe et mobile et assurant des fluctuations du champ au-dessus du réseau de fentes rayonnantes du tube creux mobile,
   et c) troisième fréquence excitant un mode d'ordre supérieur, de préférence TE02, dans le tube creux fixe, et fondamental dans le tube creux mobile,
      et la section droite du tube creux mobile est plus faible que celle du tube creux fixe.

Pour des raisons de commodité pratique, on utilisera le plus souvent un tube creux mobile perpendiculaire au tube creux fixe.

L'emploi d'un tube creux fixe muni d'une fente médiane continue et d'un tube creux mobile muni d'une antenne électrique plongeant dans cette fente médiane permet de ne rayonner que très peu d'énergie, ce qui assure qu'il parvienne aux récepteurs une énergie suffisante pour procurer une bonne liaison.

Les antennes électriques plongeant dans la fente médiane du tube creux fixe, et éventuellement du tube creux mobile, sont disposées dans les tubes creux formant guides d'ondes à un endroit où le champ électrique est maximal. Le couplage avec cette antenne est donc très important.

Par ailleurs, lorsque l'ensemble du dispositif est disposé à l'intérieur d'une cage métallique, le fait de ne rayonner que très peu d'énergie hors des guides d'ondes évite que l'onde reçue par l'élément mobile interfère avec d'autres signaux électromagnétiques réfléchis par les parois de cette cage.

Il est décrit ci-après, à titre d'exemple et en référence aux figures du dessin annexé, des dispositifs de transmission d'informations et/ou d'instructions entre un poste de contrôle et un chariot manipulateur disposé dans une enceinte soumise à un rayonnement ionisant.

La figure 1 représente schématiquement en perspective un dispositif dans lequel le tube creux mobile comme le tube creux fixe sont munis d'une fente médiane continue.

La figure 2 représente schématiquement un dispositif analogue, en coupe par un plan perpendiculaire à l'axe du tube creux fixe.

La figure 3 représente schématiquement en perspective un dispositif dans lequel le tube creux mobile est muni de fentes rayonnantes perpendiculaires à son axe.

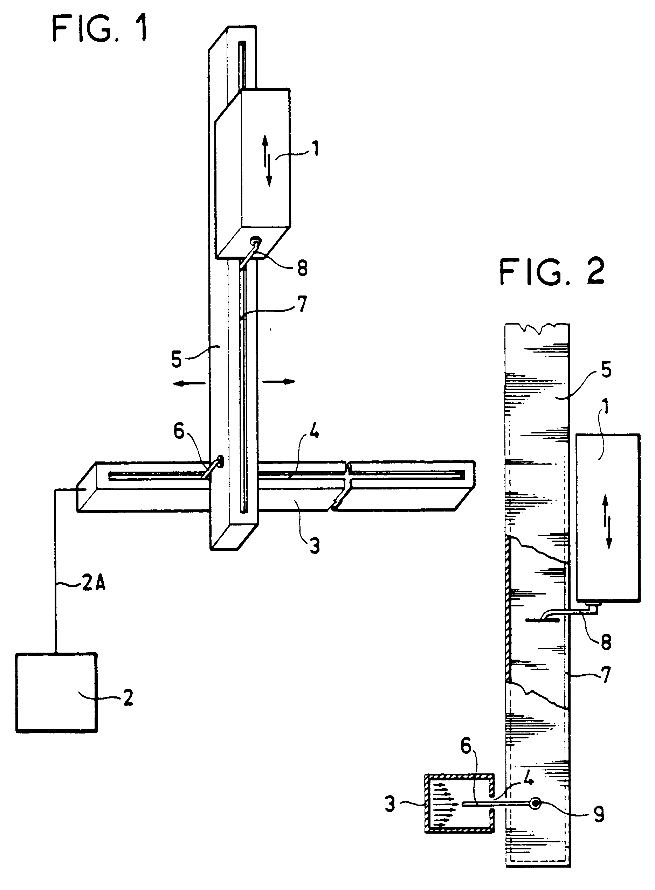

Dans la figure 1, le chariot 1 échange des instructions et informations avec le poste de contrôle représenté schématiquement en 2. Ce dernier est relié par une liaison 2A au tube creux fixe formant guide d'ondes hyperfréquences 3, muni d'une fente médiane continue 4.

Le tube creux mobile formant guide d'ondes 5, perpendiculaire au tube creux fixe et se déplaçant en translation parallèlement à la fente médiane de ce dernier, est muni d'une antenne d'émission et de réception 6 plongeant dans la fente médiane 4. Cette antenne communique avec l'intérieur du guide d'ondes mobile par une transition câble coaxial-guide d'ondes, qui transfère à ce dernier toute l'énergie prélévée par l'antenne.

Ce tube creux mobile 5 comporte lui aussi une fente médiane continue 7, dans laquelle plonge l'antenne d'émission et de réception 8 du chariot télémanipulateur 1.

La figure 2 montre plus en détail que l'antenne 6 du guide d'ondes mobile plonge par la fente fixe 4 dans la zone du guide d'ondes fixe où l'énergie des ondes hyperfréquences, représentée par les flèches, est maximale. L'antenne 6 est reliée par une transition câble coaxial-guide d'ondes 9 à l'intérieur du guide d'ondes mobile 5. L'antenne 8 du chariot télémanipulateur 1 plonge dans la fente médiane du guide d'ondes mobile.

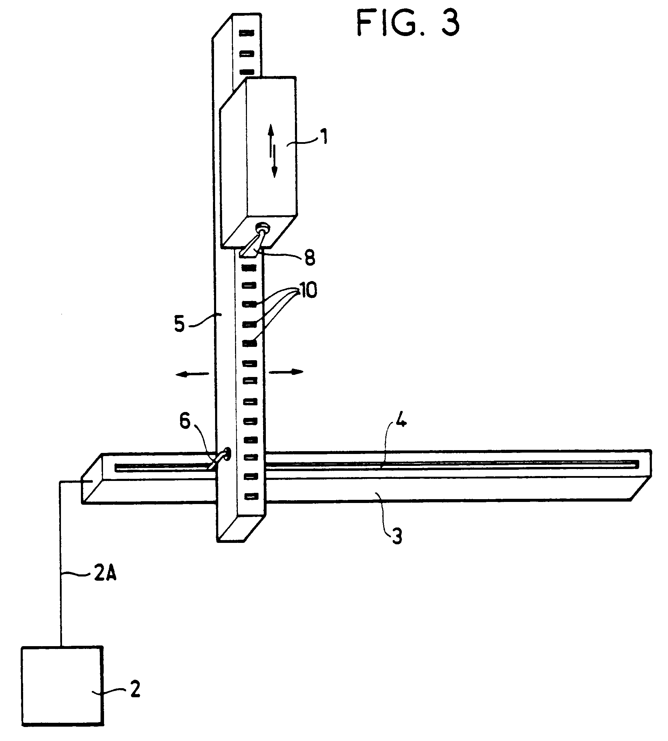

Dans le dispositif représenté en figure 3, le tube creux formant guide d'ondes fixe est analogue à celui des figures 1 et 2, mais le tube creux formant guide d'ondes mobile est percé sur sa face supérieure de fentes rayonnantes 10 perpendiculaires à son axe. L'antenne 8 associée au chariot 1 capte alors le rayonnement en hyperfréquences émis par ces fentes. Cette disposition permet en outre de repérer la position du chariot par rapport au guide d'ondes mobiles.
Dans ce cas, on utilise trois fréquences :
- une première fréquence excite un mode fondamental TE01 dans les guides d'ondes fixe et mobile et assure un champ homogène au-dessus du réseau de fentes pratiquées dans le guide d'ondes mobile, par exemple pour la transmission d'informations vidéo ou d'instructions de commande. Cette fréquence sera par ex. de 2 450 MHz.
- Une deuxième fréquence excite un mode fondamental TE01 dans les guides d'ondes fixe et mobile, mais procure des fluctuations du champ électromagnétique reçu au-dessus du réseau de fentes du tube creux mobile. Ceci permet d'obtenir la position relative Y du chariot sur le tube creux. Cette fréquence est par ex. de 2 700 MHz
- Une troisième fréquence (par ex 2 800 MHz) excite un mode d'ondes supérieur (par ex. TE02) dans le guide d'ondes fixe ; l'antenne plongeante 6 du guide d'ondes mobile voit alors de maximums et des minimums du champ électromagnétique au lieu d'un champ constant en mode fondamental. La position de ces extremums sera uniquement fonction de la section droite du guide d'ondes fixe et de la fréquence.

La section droite du guide d'ondes mobile sera choisie inférieure à celle du guide d'ondes fixe ; ainsi les variations de champ enregistrées par l'antenne seront transmises sans déformation vers le chariot (le mode d'excitation étant TE01 dans le guide d'ondes mobile pour cette fréquence). On obtiendra ainsi la position relative X du chariot pas rapport au tube creux fixe.

La portée de la liaison étant faible, et le rayonnement ne sortant par de la cage métallique, il est possible d'utiliser des fréquences plus élevées que lorsque l'on n'utilise qu'une seule fréquence, afin d'obtenir des sections droites de guides d'ondes réduites avec cependant une atténuation linéique négligeable.

Lorsque l'on emploie les guides d'ondes fixe et mobile à fentes médianes, les pertes de couplage sont très faibles et les puissances nécessaires sont beaucoup plus réduites (de l'ordre de 1mw) que lorsque le guide d'ondes mobile est muni de fentes perpendiculaires à son axe. Il est également possible dans ce cas d'obtenir le positionnement du chariot, pourvu que l'on utilise des guides d'ondes de sections droites différentes.

L'invention s'applique plus particulièrement aux télémanipulateurs ou robots de manutention ou de stockage de combustibles ou de déchets nucléaires.

Bien entendu, l'invention s'applique au contrôle d'un élément se déplaçant dans un plan vertical aussi bien qu'un plan horizontal. On peut aussi combiner le contrôle des déplacements dans des plans différents, par exemple horizontal et vertical, pour assurer le contrôle des déplacements d'un élément dans un volume.

## Revendications

1. Dispositif de transmission d'informations et/ou d'instructions à large bande passante et/ou de localisation entre un élément (1) mobile dans un plan et un poste (2) de contrôle de cet élément, comprenant un tube creux fixe (3) formant guide d'ondes en hyperfréquences, muni d'une fente médiane continue (4), auquel ledit poste de contrôle est relié, caractérisé par un tube creux mobile (5), porteur de l'élément mobile et formant guide d'ondes en hyperfréquences, dont l'axe forme un angle avec celui du tube creux fixe, et assujetti à se déplacer en translation parallèle à la fente médiane continue du tube creux fixe, et muni d'une antenne électrique (6) plongeant dans cette fente médiane, d'une transition câble coaxial-guide d'ondes (9) pour relier ladite au tenne (6) au tube creux mobile (5) et de moyens (7, 8) de transmission du rayonnement en hyperfréquences avec l'élément mobile à mettre en liaison avec le poste de contrôle.

2. Dispositif selon la revendication 1, caractérisé en ce que le tube creux mobile (5) est muni d'une fente médiane continue (7), et en ce que les moyens de transmission du rayonnement en hyperfréquences de ce tube à l'élément mobile comprennent la fente médiane continue (7) du tube creux mobile (5) et une antenne (8) associée à l'élément mobile (1) plongeant dans cette fente médiane continue (7).

3. Dispositif selon la revendication 1, caractérisé en ce que le tube creux mobile est muni de fentes rayonnantes (10) perpendiculaires à son axe, et en ce que l'élément mobile est muni d'une antenne (8) de réception et/ou d'émission d'ondes hyperfréquences vers les fentes du tube creux mobile.

4. Dispositif selon les revendications 2 ou 3, caractérisé en ce qu'il comporte au moins un générateur d'ondes hyperfréquences sous trois fréquences différentes
a) une première fréquence excitant un mode fondamental TE01 dans les tubes creux fixe et mobile et assurant un champ homogène au-dessus du réseau de fentes rayonnantes du tube creux mobile,
b) une deuxième fréquence excitant un mode fondamental TE01 dans les tubes creux fixe et mobile et assurant des fluctuations du champ au-dessus du réseau de fentes rayonnantes du tube creux mobile,
et c) une troisième fréquence excitant un mode d'ordre supérieur, de préférence TE02, dans le tube creux fixe, et fondamental TE01 dans le tube creux mobile,
et en ce que la section droite du tube creux mobile est plus faible que celle du tube creux fixe.

## Claims

1. A device for transmitting broadband data and/or instructions and/or localization signals between an element (1) moving in a plane and a control station (2) for said element, the device comprising a fixed hollow tube (3) forming a waveguide for microwaves, having a continuous median slot (4), to which said control station is connected, characterized by a moving hollow tube (5), carrying the moving element and forming a waveguide for microwaves, whose axis forms an angle with the axis of the fixed hollow tube, and constrained to move in translation parallel to the continuous median slot of the fixed hollow tube, and equipped with an electric antenna (6) plunging into said median slot, with a coaxial cable-to-waveguide transition (9) for connecting the antenna (6) with the moving hollow tube (5), and with means (7, 8) for transmitting radiation at microwave frequencies with the mobile element tube communicatively linked with the control station.

2. A device according to claim 1, characterized in that the moving hollow tube (5) is provided with a continuous median slot (7), and in that the means (7) for transmitting the radiation at microwave frequencies from said tube to the moving element include the continuous median slot (7) of the moving hollow tube (5) and an antenna (8) associated with the moving element (1), said antenna plunging in said continuous center slot.

3. A device according to claim 1, characterized in that the moving hollow tube is provided with radiating slots (10) perpendicular to its axis, and in that the moving element is provided with a receive and/or transmit antenna (8) able to communicate with the slots in the moving hollow tube.

4. A device according to claim 2 or 3, characterized in that it includes at least one microwave generator operating at three different frequencies, namely
a) a first frequency exciting a fundamental TEO1 mode in the fixed and moving hollow tubes and ensuring a uniform field above the network of radiating slots of the moving hollow tube,
b) a second frequency exciting a fundamental TEO1 mode in the fixed and moving hollow tubes and ensuring fluctuation of the field above the network of radiating slots of the moving hollow tube, and
c) a third frequency exciting a higher order mode, preferably TEO2, in the fixed hollow tube and a fundamental mode in the moving hollow tube,
and in that the cross section of the moving hollow tube is smaller than that of the fixed hollow tube.

## Patentansprüche

1. Einrichtung zum breitbandigen Übermitteln von Informationen und/oder Befehlen und/oder zum Lokalisieren zwischen einem in einer Ebene beweglichen Element (1) und einer Kontrollstation (2) für dieses Element, mit einem feststehenden Hohlrohr (3), das einen Mikrowellenleiter bildet und einen kontinuierlichen Mittelschlitz (4) aufweist sowie mit der Kontrollstation verbunden ist, gekennzeichnet durch ein bewegliches Hohlrohr (5), das Träger des beweglichen Elementes ist und einen Mikrowellenleiter bildet, dessen Achse einen Winkel mit der Achse des feststehenden Hohlrohrs bildet und das sich parallel zum kontinuierlichen Mittelschlitz des feststehenden Hohlrohrs bewegen kann, sowie mit einer elektrischen Antenne (6), die in diesen Mittelschlitz eintaucht, mit einem Koaxialkabel-Wellenleiter-Übergang (9), um diese Antenne (6) mit dem beweglichen Hohlrohr (5) zu verbinden, und mit Mitteln (7, 8) zur Übertragung von Mikrowellenstrahlung versehen ist, um das bewegliche Element mit der Kontrollstation in Verbindung zu bringen.

2. Einrichtung nach Anspruch 1, dadurch gekennzeichnet, daß das bewegliche Hohlrohr (5) mit einem kontinuierlichen Mittelschlitz (7) versehen ist und daß die Mittel zur Übertragung von Mikrowellenstrahlung an das bewegliche Element den kontinuierlichen Mittelschlitz (7) des beweglichen Hohlrohrs (5) und eine Antenne (8) enthalten, die dem beweglichen Element zugeordnet ist und in den kontinuierlichen Mittelschlitz (7) eintaucht.

3. Einrichtung nach Anspruch 1, dadurch gekennzeichnet, daß das bewegliche Hohlrohr mit senkrecht zu seiner Achse verlaufenden strahlenden Schlitzen (10) versehen ist und daß das bewegliche Element mit einer Empfangs- und/oder Sendeantenne (8) für an die Schlitze des beweglichen Hohlrohrs gelangende Mikrowellen versehen ist.

4. Einrichtung nach Anspruch 2 oder 3, dadurch gekennzeichnet, daß sie mindestens einen Mikrowellengenerator aufweist, der mit drei unterschiedlichen Frequenzen arbeitet, nämlich
a) einer ersten Frequenz, die einen Grundmodus TEO1 im festen und im beweglichen Hohlrohr anregt und ein homogenes Feld oberhalb des Netzes von Strahlungsschlitzen des beweglichen Hohlrohrs bewirkt,
b) einer zweiten Frequenz, die einen Grundmodus TEO1 im festen und im beweglichen Hohlrohr anregt und Fluktuationen des Feldes oberhalb des Netzes von Strahlungsschlitzen des beweglichen Hohlrohrs bewirkt, und
c) einer dritten Frequenz, die einen Modus höherer Ordnung, vorzugsweise TEO2, im feststehenden Hohlrohr und einen Grundmodus TEO1 im beweglichen Hohlrohr anregt,
und daß der Querschnitt des beweglichen Hohlrohrs kleiner als derjenige des feststehenden Hohlrohrs.
